# DEMANDE DE BREVET EUROPEEN

(11) **EP 2 524 846 A1**
(43) Date de publication de la demande: **21.11.2012**
(21) Numéro de dépôt: 12167874.2
(22) Date de dépôt: 14.05.2012
(51) Int. Cl.: B60S 1/50

(54) **Ensemble pompe et réservoir pour système de lavage de surfaces vitrées d'un véhicule automobile**

(30) Priorité: 18.05.2011 FR 1154315
(71) Demandeur: MGI COUTIER, 01410 Champfromier (FR)
(72) Inventeur: Leblanc, Nicolas, 26300 BESAYES (FR)
(74) Mandataire: Chevalier, Renaud Philippe

(57) **Abrégé**

L'ensemble comprend une pompe (3) propulsant un liquide de lavage et, en communication directe avec un orifice d'entrée (5) de la pompe (3), un réservoir de charge (7) contenant une réserve de liquide de lavage. Le réservoir de charge (7) comporte un embout de raccordement (8), pour sa connexion séparable avec un réservoir principal (9) étanche de liquide de lavage, qui est en particulier un réservoir souple amovible. Cet ensemble est applicable aux systèmes embarqués de lavage de surfaces vitrées des véhicules automobiles, telles que pare-brise, vitres arrière ou phares.

## Description

La présente invention concerne, d'une façon générale, le domaine technique des systèmes embarqués de lavage de surfaces vitrées des véhicules automobiles, telles que les pare-brise, les vitres arrière et les phares. Plus particulièrement, cette invention s'intéresse à un ensemble incluant au moins une pompe et un réservoir, pour un système de lavage de surfaces vitrées d'un véhicule automobile. Dans toute la suite, l'expression « surfaces vitrées » désigne aussi bien des vitres classiques en verre que des parois en matière plastique transparente, les phares actuels des véhicules automobiles étant réalisés en matière plastique.

Les systèmes de lavage de surfaces vitrées des véhicules automobiles sont habituellement constitués d'un ou plusieurs réservoirs prévus pour contenir un liquide de lavage, d'une ou plusieurs pompes et d'au moins une canalisation terminée par au moins un gicleur prévu pour projeter le liquide de lavage sur une surface vitrée.

Le réservoir doit être réalisé de façon étanche pour éviter toute fuite du liquide de lavage par gravité. Ce réservoir doit être adapté à la nature du liquide de lavage, qui peut être notamment un mélange d'eau et de produit antigel facilitant le décollage d'impuretés adhérant sur les vitres, tel que le glycol.

La forme et le placement des réservoirs de liquide lave-glace sont soumis à l'environnement complexe des compartiments moteur des véhicules ou des compartiments d'habitacle latéraux ou arrière des véhicules. Ainsi, ces réservoirs sont le plus souvent réalisés avec des formes et dimensions caractéristiques du véhicule auquel ils sont destinés.

Les réservoirs de liquide lave-glace peuvent être conçus comme des produits autonomes, uniquement raccordés à une pompe et supportés individuellement. Ces réservoirs peuvent aussi être intégrés avec diverses autres fonctions ou organes du véhicule, tels que le bocal de dégazage du circuit de liquide de refroidissement, ou le bac de support de la batterie. Les réservoirs de liquide lave-glace peuvent encore eux-mêmes supporter d'autres organes ou équipements, localisés ou passant dans leur environnement proche, tels qu'un tuyau appartenant à un circuit de fluide ou une béquille prévue pour le maintien du capot avant du véhicule en position ouverte.

Les systèmes embarqués de lavage de surfaces vitrées des véhicules automobiles comprennent habituellement un réservoir de liquide de lavage, dans la partie basse duquel est placée la pompe. Ainsi, la pompe est en permanence au contact du liquide de lavage et, lorsque cette pompe est actionnée notamment par un moteur électrique, elle puise le liquide de lavage dans le réservoir et propulse ce liquide dans la canalisation qui mène au gicleur.

Le réservoir, ainsi associé à la pompe, est habituellement un réservoir rigide en matière plastique, fabriqué par un procédé de soufflage ou un procédé d'injection de matière plastique. Ces procédés de fabrication permettent d'obtenir des réservoirs de formes et de dimensions spécifiques aux véhicules auxquels ils sont destinés. Ils nécessitent cependant des outillages et notamment des moules dédiés à chaque cas particulier d'application.

Dans sa conception classique rappelée ci-dessus, le réservoir de liquide de lavage est un élément inamovible et, en particulier, un élément inséparable de la pompe. Du reste, les systèmes de lavage actuels ne sont pas conçus pour rendre le réservoir amovible, en particulier sous l'aspect de l'étanchéité.

Il a déjà été envisagé, dans les systèmes embarqués de lavage de surfaces vitrées des véhicules automobiles, l'utilisation de réservoirs souples du genre « poche » pour le stockage du liquide de lavage -voir les documents de brevets FR 2 877 905 A1 et FR 2 935 121 A1.

De tels réservoirs souples ont pour avantages de s'adapter au volume disponible dans le véhicule, et d'être peu encombrants à l'état vide, notamment pour leur transport depuis leur lieu de fabrication jusqu'au lieu de montage sur le véhicule.

Cependant, les réservoirs souples connus restent dans tous les cas des éléments non amovibles, c'est-à-dire non séparables de la pompe à laquelle ils sont associés, et non étanches par eux-mêmes de sorte qu'il est inconcevable de transporter et d'amener sur le véhicule un tel réservoir pré-rempli de liquide de lavage.

De plus, le fonctionnement du système de lavage devient impossible lorsque le réservoir souple est vide ou retiré (en supposant ce réservoir amovible) puisque la pompe ne dispose alors d'aucune réserve de liquide, même limitée et temporaire.

Ainsi, les propositions actuelles de réservoirs souples pour liquide de lavage n'exploitent pas toutes les possibilités que pourrait offrir ce type de réservoirs, et rendent très limité l'intérêt réel de ce type de réservoirs. Ceci résulte, en particulier, du fait que lesdits réservoirs souples sont connectés à la pompe par un simple embout de raccordement, réalisant une liaison mécanique et fluidique permanente amenant le liquide de lavage directement à l'entrée de la pompe.

La présente invention vise à remédier aux inconvénients et insuffisances ici constatés des systèmes de lavage actuellement connus utilisant des réservoirs souples pour le liquide de lavage, en fournissant un ensemble perfectionné réunissant au moins une pompe et un réservoir, en rendant possible l'amovibilité du réservoir, et en procurant l'étanchéité alors souhaitée ainsi que le stockage d'une réserve permanente de liquide de lavage présent à l'entrée de la pompe.

A cet effet, l'invention a pour objet un ensemble pompe et réservoir pour système embarqué de lavage de surfaces vitrées d'un véhicule automobile, ledit ensemble comprenant au moins une pompe et un réservoir de liquide de lavage prévu pour être propulsé par la pompe, et cet ensemble étant caractérisé par le fait qu'il comprend, en communication directe avec un orifice d'entrée de la pompe , un réservoir de charge apte à contenir une réserve de liquide de lavage, le réservoir de charge comportant au moins un embout de raccordement pour sa connexion séparable à un réservoir principal étanche de liquide de lavage, en particulier un réservoir souple amovible.

Ainsi, l'invention propose de réunir, notamment en un seul bloc rigide, la pompe et un petit réservoir spécifique dit « de charge » qui, placé à l'entrée de cette pompe, offre une réserve pour une quantité stockée de liquide de lavage qui, avantageusement, correspond à la quantité de liquide nécessaire pour au moins un lavage efficace. La zone de l'entrée de la pompe se trouve en permanence au contact du liquide de lavage stocké dans le réservoir de charge, si bien que la pompe peut, à chaque mise en fonctionnement, trouver du liquide à son entrée et propulser ce liquide vers le ou les gicleurs extérieurs. En particulier, le réservoir de charge reste associé constructivement et fonctionnellement à la pompe, même si le réservoir principal amovible se trouve momentanément déconnecté et retiré, ce qui permet un fonctionnement utile (pour au moins un lavage) en l'absence du réservoir principal.

Le réservoir principal, qui peut être un réservoir de toute nature mais est avantageusement un réservoir du genre poche souple, est conçu pour contenir une quantité de liquide de lavage adaptée à une durée d'utilisation acceptable par le conducteur du véhicule concerné. Etant amovible et étanche, ce réservoir peut, lorsqu'il est vide, être aisément rempli à nouveau de liquide de lavage propre par son propre embout de raccordement, ou être alors remplacé par un nouveau réservoir principal plein, le réservoir vide étant dans ce dernier cas soit jeté, soit de préférence échangé contre le réservoir plein pour limiter la pollution et permettre son recyclage.

La conception de l'ensemble, objet de l'invention, permet aussi à partir des mêmes composants de déporter ou non la pompe par rapport au réservoir principal, pour un placement optimisé de ces composants dans le véhicule concerné, le réservoir de charge restant toujours associé à la pompe.

De plus, le bloc constructif et fonctionnel réunissant la pompe et le réservoir de charge peut servir aisément de base ou de support pour des organes et fonctions annexes, s'ajoutant avantageusement à l'embout de raccordement du réservoir principal, tel que réservoir souple amovible donc interchangeable.

Ainsi, l'ensemble pompe et réservoir objet de l'invention peut comporter, à la sortie de la pompe donc à l'entrée d'une canalisation menant à un gicleur, un clapet qui obture la sortie de la pompe lorsque celle-ci est à l'arrêt.

Un tel clapet peut, par un effet de « piston », rappeler partiellement le liquide contenu dans la canalisation menant au gicleur, et il empêche que, lors de la déconnexion du réservoir principal, la colonne de liquide située au niveau de l'embout de raccordement du réservoir principal se vide à l'extérieur, et ceci sans nécessité d'un bouchon supplémentaire.

L'ensemble pompe et réservoir peut aussi comporter, au niveau du réservoir de charge, un dispositif de mise à l'air qui permet de chasser l'air contenu dans ce réservoir de charge, notamment avant la première utilisation du système de lavage.

Cet ensemble pompe et réservoir peut encore recevoir un détecteur de niveau, en liaison directe avec le réservoir de charge mais apte à mesurer, par un principe de vases communicants, le niveau de liquide de lavage restant à l'intérieur du réservoir principal. Ainsi, le niveau de liquide dans le réservoir principal est détectable sans compartiment additionnel et sans nécessité de créer une ouverture latérale dans ce réservoir, ce qui apparaît du reste inconcevable dans le cas d'un réservoir constitué par une poche souple et de surcroît amovible.

Ledit ensemble pompe et réservoir peut aussi recevoir une extension formant une goulotte de remplissage, ce qui permet de rajouter du liquide de lavage sans avoir à déconnecter le réservoir principal pour le remplir à nouveau ou pour l'échanger contre un réservoir plein.

L'ensemble pompe et réservoir peut encore être associé à des moyens de chauffage, donc à une source de chaleur apte à réchauffer ou dégeler le liquide de lavage. On notera qu'on dispose ainsi d'une combinaison particulièrement avantageuse, dans laquelle les moyens de chauffage apportent de la chaleur potentiellement au liquide de lavage stocké dans le réservoir de charge, mais surtout au liquide de lavage rappelé par le clapet, donc aussi bien en amont qu'en aval de la pompe, tout en évitant le chauffage direct du réservoir principal.

L'invention sera mieux comprise à l'aide de la description qui suit, en référence au dessin schématique annexé représentant, à titre d'exemples, quelques formes de réalisation de cet ensemble pompe et réservoir.
Figure 1 est une vue en coupe verticale d'un ensemble conforme à la présente invention, dans sa conception de base,
Figure 2 est une vue en coupe verticale d'un autre mode de réalisation de cet ensemble, avec fonctions annexes,
Figure 3 représente, en coupe verticale, encore un autre mode de réalisation dudit ensemble, pourvu d'autres fonctions annexes.

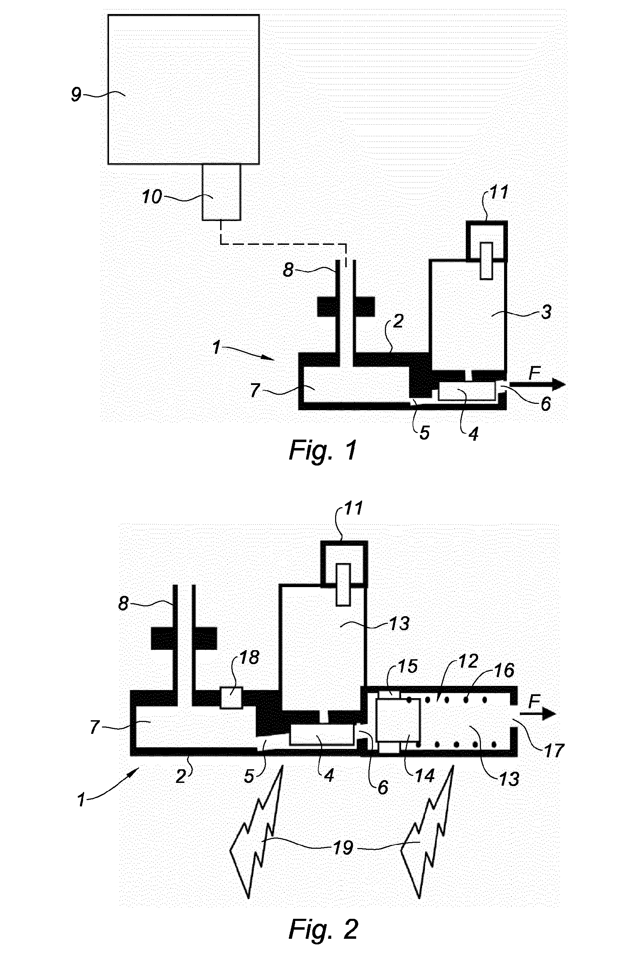

En se référant à la figure 1, l'ensemble 1 considéré comporte un corps 2 évidé, sur lequel est fixée une pompe 3 à actionnement électrique. La pompe 3 peut être une pompe à piston, une pompe à turbine, une pompe péristaltique, ou encore une pompe d'un autre type. Le dessin montre schématiquement, à titre de simple exemple, une pompe rotative à turbine 4.

La configuration du corps 2 définit un orifice d'entrée 5 de la pompe 3 et un orifice de sortie 6 de cette pompe 3.

Le corps 2 délimite aussi un réservoir de charge 7, en communication directe avec l'orifice d'entrée 5 de la pompe 3. Le réservoir de charge 7 comporte un embout de raccordement 8 dirigé vers l'extérieur, prévu pour la connexion d'un réservoir principal 9 extérieur, lui-même pourvu d'un raccord 10 avec clapet intégré.

Le réservoir principal 9 est un réservoir étanche, notamment un réservoir constitué par une poche souple, ce réservoir principal 9 étant prévu amovible (et du reste représenté séparé de l'embout de raccordement 8, sur la figure 1). Plus particulièrement, le réservoir principal 9 est une poche souple réalisée en matière plastique, par exemple en polyuréthane ou en polyéthylène basse densité. Lorsqu'il est connecté à l'embout de raccordement 8, par son propre raccord 10, le réservoir principal 9 peut se situer à proximité de la pompe 3, une implantation plus lointaine de ce réservoir n'étant toutefois pas exclue comme précisé plus bas.

L'ensemble 1 précédemment décrit est prévu pour être monté sur un véhicule automobile, la pompe 3 étant raccordée au circuit électrique du véhicule par l'intermédiaire d'un connecteur électrique 11 et l'orifice de sortie 6 de la pompe 3 étant raccordé au départ d'une canalisation extérieure menant à un ou plusieurs gicleurs, dirigés eux-mêmes vers une ou plusieurs surfaces vitrées du véhicule.

En situation de fonctionnement, le réservoir principal 9 est rempli de liquide de lavage qui, par le raccord 10 et l'embout de raccordement 8, vient aussi remplir le réservoir de charge 7 de manière à être présent dans la zone de l'orifice d'entrée 5 de la pompe 3.

Lorsque cette pompe 3 est actionnée, le liquide de lavage est puisé au travers de l'orifice d'entrée 5 et se trouve propulsé, au travers de l'orifice de sortie 6, vers la canalisation extérieure qui l'amène jusqu'au(x) gicleur(s), comme symbolisé par une flèche F.

Le réservoir principal 9 étant amovible, on notera que même en l'absence momentanée de ce réservoir, le réservoir de charge 7 contient une quantité de liquide de lavage, faible ou plus importante mais toujours suffisante pour réaliser au moins un lavage efficace d'une surface vitrée.

La figure 2, sur laquelle les éléments correspondant à ceux précédemment décrits sont désignés par les mêmes références, montre un autre mode de réalisation de l'ensemble 1, dans lequel un clapet 12 est placé dans une cavité 13 du corps 2, du côté de l'orifice de sortie 6 de la pompe 3. Le clapet 12 comprend un obturateur 14, un joint d'étanchéité 15 monté autour de l'obturateur 14, et un ressort de rappel 16 sollicitant l'obturateur 14 en direction de l'orifice de sortie 6 de la pompe 3. Ainsi, lorsque la pompe 3 n'est pas actionnée, l'obturateur 14 est repoussé contre l'orifice de sortie 6 de la pompe 3 par le ressort de rappel 16, de sorte qu'une certaine quantité de liquide de lavage se trouve rappelée à l'intérieur de la cavité 13, au travers de l'orifice de sortie 17 de cette cavité 13. De plus, par sa fonction obturatrice, le clapet 12 retient le liquide de lavage dans le réservoir de charge 7 et dans l'embout de raccordement 8, même si le réservoir principal 9 se trouve momentanément retiré.

Comme le montre aussi la figure 2, le réservoir de charge 7 peut comporter dans sa partie supérieure un dispositif de mise à l'air 18, laissant passer l'air mais non le liquide de lavage, pour faciliter l'amorçage de la pompe 3.

Comme le montre encore la figure 2, une source de chaleur électrique ou autre symbolisée en 19 peut être associée à l'ensemble 1, la source de chaleur 19 apportant en particulier de la chaleur au liquide de lavage rappelé dans la cavité 13 par le clapet 12. Il devient ainsi possible de dégeler le liquide de lavage et/ou de réaliser le lavage des surfaces vitrées du véhicule avec un liquide plus chaud, tout en évitant de chauffer le réservoir principal (non représenté sur la figure 2).

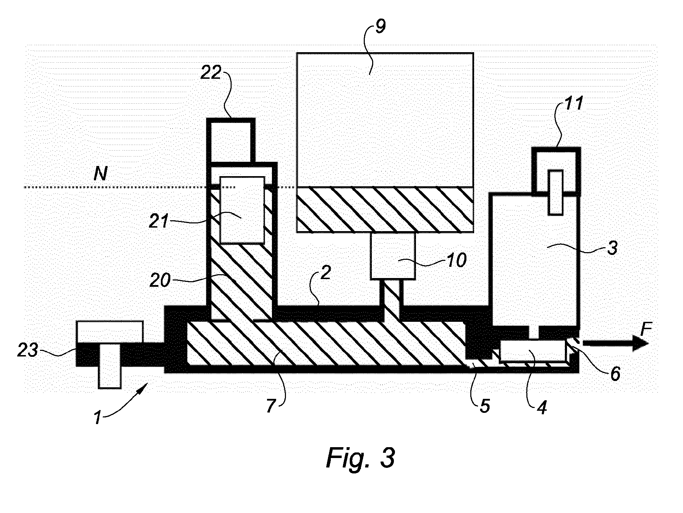

La figure 3 représente encore un autre mode de réalisation de l'ensemble 1, le réservoir principal 9 étant ici représenté connecté à l'embout de raccordement 8. Le réservoir de charge 7 comporte ici une extension 20 dirigée vers le haut, et ainsi située en regard du réservoir principal 9. L'extension 20 est équipée d'un détecteur du niveau N de liquide dans cette extension 20 donc aussi, par effet de vases communicants, dans le réservoir principal 9. Le détecteur de niveau est composé d'un flotteur 21 à aimant permanent, et d'un capteur 22 placé au sommet de l'extension 20 et mesurant la hauteur variable à laquelle se situe le flotteur 21.

Comme le montre encore la figure 3, le corps 2 peut comporter au moins une patte de fixation 23, pour le montage de l'ensemble 1 dans le véhicule, au point d'implantation choisi, par exemple avec fixation par vissage.

Comme déjà mentionné, le réservoir principal 9 peut être implanté à une distance plus ou moins grande de la pompe 3. Dans le cas d'une implantation proche de la pompe 3, la pompe pourrait être installée sous la grille d'auvent d'un véhicule automobile, ce type de grille présentant une surface plane possédant une légère pente. Le réservoir principal 9, notamment sous forme de poche étanche et souple, pourrait dans ce cas être posé à plat sur une telle surface, en étant au besoin maintenu par une sangle. Il est envisageable de prévoir une trappe dans la grille d'auvent, pour pouvoir accéder au réservoir principal ainsi positionné, en vue de sa déconnexion et de son remplissage ou de son échange.

Ainsi, une fois déconnecté, le réservoir principal 9 notamment sous forme de poche étanche et souple peut être de nouveau rempli, par exemple en étant amené à un distributeur automatique de liquide de lavage installé à proximité d'un poste d'essence. Une fois rempli, le réservoir principal 9 reste obturé grâce au clapet intégré dans son raccord 10, ce qui évite toute sortie du liquide de lavage jusqu'à ce que ce réservoir soit à nouveau connecté par son raccord 10 à l'embout de raccordement 8.

Selon une autre possibilité, le réservoir principal 9 vide n'est pas immédiatement rempli et réutilisé, mais il est échangé contre un nouveau réservoir similaire, vendu plein de liquide de lavage.

Ce réservoir principal 9 pouvant aussi être implanté à une distance plus importante de la pompe 3, on notera qu'il peut être placé à l'intérieur de l'habitacle du véhicule, par exemple sous un siège, dans un but de protection thermique du liquide de lavage stocké, ou bien dans une portière du véhicule en étant accessible par une trappe.

Selon sa capacité, le réservoir principal 9 peut alimenter un système embarqué de lavage unique, ou plusieurs systèmes, notamment de lavage des vitres avant et arrière, auquel cas un circuit approprié alimentant les gicleurs, avec un distributeur avant/arrière, est à prévoir en aval de la pompe 3.

On ne s'écarterait pas du cadre de l'invention, telle que définie dans les revendications annexées :
- en prévoyant un réservoir principal de toute forme ou contenance, à consistance souple ou plus ou moins rigide,
- en réalisant toutes combinaisons des diverses fonctions annexes illustrées sur les figures 2 et 3,
- en prévoyant sur ledit ensemble pompe et réservoir d'autres organes ou fonctions annexes, par exemple en ajoutant une goulotte de remplissage ou des capteurs autres que le détecteur de niveau,
- en réalisant cet ensemble avec plusieurs pompes et/ou avec des moyens de raccordement pour plus d'un réservoir principal, selon la nature et l'étendue des surfaces vitrées nécessitant un lavage, ces surfaces vitrées pouvant comprendre le pare-brise, la vitre arrière, les phares, ...

## Revendications

1. Ensemble pompe et réservoir pour système embarqué de lavage de surfaces vitrées d'un véhicule automobile, ledit ensemble (1) comprenant au moins une pompe et un réservoir de liquide de lavage prévu pour être propulsé par la pompe, **caractérisé en ce qu'**il comprend, en communication directe avec un orifice d'entrée (5) de la pompe (3), un réservoir de charge (7) apte à contenir une réserve de liquide de lavage, le réservoir de charge (7) comportant au moins un embout de raccordement (8) pour sa connexion séparable à un réservoir principal (9) étanche de liquide de lavage, en particulier un réservoir souple amovible.

2. Ensemble pompe et réservoir selon la revendication 1, **caractérisé en ce qu'**il réunit, en un seul bloc rigide, la pompe (3) et le réservoir de charge (7), placé à l'entrée (5) de cette pompe (3).

3. Ensemble pompe et réservoir selon la revendication 1 ou 2, **caractérisé en ce que** le réservoir de charge (7) offre une réserve pour une quantité stockée de liquide de lavage qui correspond à la quantité nécessaire pour au moins un lavage efficace.

4. Ensemble pompe et réservoir selon l'une des revendications 1 à 3, **caractérisé en ce qu'**il comporte, à la sortie (6) de la pompe (3) donc à l'entrée d'une canalisation menant à un gicleur, un clapet (12) qui obture la sortie (6) de la pompe (3) lorsque celle-ci est à l'arrêt.

5. Ensemble pompe et réservoir selon l'une des revendications 1 à 4, **caractérisé en ce qu'**il comporte, au niveau du réservoir de charge (7), un dispositif de mise à l'air (18).

6. Ensemble pompe et réservoir selon l'une des revendications 1 à 5, **caractérisé en ce qu'**il reçoit un détecteur de niveau (21, 22), en liaison directe avec le réservoir de charge (7).

7. Ensemble pompe et réservoir selon l'une des revendications 1 à 6, **caractérisé en ce qu'**il reçoit une extension formant une goulotte de remplissage.

8. Ensemble pompe et réservoir selon l'une des revendications 1 à 7, **caractérisé en ce qu'**il est associé à des moyens de chauffage (19).

9. Ensemble pompe et réservoir selon les revendications 4 et 8, caractérisé en ce les moyens de chauffage (19) sont agencés pour apporter de la chaleur au liquide de lavage rappelé par le clapet (12).

10. Système embarqué de lavage de surfaces vitrées d'un véhicule automobile, le système comprenant un ensemble (1) pompe et réservoir selon l'une des revendications 1 à 9.
